# EUROPÄISCHE PATENTANMELDUNG

(11) **EP 4 632 552 A1**
(43) Veröffentlichungstag der Anmeldung: **15.10.2025**
(21) Anmeldenummer: 24169608.7
(22) Anmeldetag: 11.04.2024
(51) Int. Cl.: G06F 3/14

(54) **LEITSTELLENEINRICHTUNG UND VERFAHREN ZUM BETREIBEN EINER EISENBAHNTECHNISCHEN ANLAGE**

(71) Anmelder: Siemens Mobility GmbH, 80997 München (DE)
(72) Erfinder: Schubert, David, 38162 Cremlingen/Weddel (DE); Strub, Leo, 38100 Braunschweig (DE)
(74) Vertreter: Siemens Patent Attorneys

(57) **Zusammenfassung**

Die Erfindung betrifft eine Leitstelleneinrichtung (1) für eine eisenbahntechnische Anlage, mit mehreren rechnergestützten und voneinander im Wesentlichen unabhängigen Applikationen (2), die jeweils zum Erstellen und Ausgeben von applikationsbezogenen Bilddaten (11) ausgebildet sind,
mit wenigstens einer zentralen Recheninstanz (3), die zum Empfangen der applikationsbezogenen Bilddaten (11) ausgebildet ist,
mit wenigstens einer mit der Recheninstanz (3) verbundenen Anzeigeeinrichtung (6) zur Anzeige der applikationsbezogenen Bilddaten (11),
mit wenigstens einem rechnergestützten Integrationsmodul (4), das sowohl mit der Recheninstanz (3) als auch mit den mehreren Applikationen (2) verbunden ist und für einen Austausch von Prozessdaten (12) und/oder Arbeitsablaufinformationen (13) zwischen den Applikationen (2) ausgebildet ist, und
mit wenigstens einer UX/UI-Datenbank (10), in der applikationsübergreifende UX/UI-Vorgaben (15), wie beispielsweise Farben, Schriftarten oder Icons, für die auf der Anzeigeeinrichtung (6) anzuzeigenden Bilddaten (11) abgelegt sind,
wobei die Applikationen (2) beim Erstellen der applikationsbezogenen Bilddaten (11) jeweils zur Berücksichtigung der applikationsübergreifenden, in der UX/UI-Datenbank (10) abgelegten UX/UI-Vorgaben (15) ausgebildet sind.

Die Erfindung hat den Vorteil, dass auf der Anzeigeeinrichtung (6) ein einheitliches Design der verschiedenen Applikationen (2) erreicht werden kann. Die Erfindung betrifft auch ein Verfahren zum Betreiben einer eisenbahntechnischen Anlage.

## Beschreibung

### Technisches Gebiet

Die Erfindung betrifft eine Leitstelleneinrichtung für eine eisenbahntechnische Anlage sowie ein Verfahren zum Betreiben einer eisenbahntechnischen Anlage.

In eisenbahntechnischen Anlagen sind Leitstelleneinrichtungen (kurz: Leitstellen), die auch als Betriebszentrale bezeichnet werden können, für die zentrale Koordination und Steuerung der eisenbahntechnischen Anlage ausgebildet. Von hier wird der Bahnbetrieb für einen bestimmten Bereich in Bezug auf Steuerung, Sicherung und Disposition bestimmt. Mit einer Leitstelleneinrichtung verbunden sind fernsteuerbare Stellwerke wie beispielsweise elektronische Stellwerke, die das Einstellen der Fahrstraßen für Züge und Rangierfahrten über große Entfernungen hinweg ermöglichen. In den Leitstelleneinrichtungen laufen sozusagen alle Fäden zusammen. Eine solche Leitstelleneinrichtung für eine eisenbahntechnische Anlage kann neben der Steuerung und Überwachung des Zugverkehrs beispielsweise auch ein Gebäude- und Fahrzeugmanagement beinhalten.

Hierfür kommen Informationen von verschiedensten Applikationen zusammen, die auf wenigstens einer gemeinsamen Anzeigeeinrichtung dargestellt werden. Die Bediener der Leitstelleneinrichtung können die eisenbahntechnische Anlage von hier aus überwachen und Befehle zur Steuerung eingeben.

Für die Applikationen, die im Wesentlichen voneinander unabhängig ausgebildet sind, teilweise von verschiedenen Herstellern stammen können und/oder der Leitstelleneinrichtung erst nach und nach hinzugefügt wurden, ist eine Integration der verschiedenen Applikationen und deren Darstellungen oftmals technisch aufwändig und damit kostenintensiv.

### Zusammenfassung der Erfindung

Es ist daher die Aufgabe der vorliegenden Erfindung, eine Leitstelleneinrichtung und ein Verfahren der eingangsgenannten Art bereitzustellen, durch welche verschiedene Applikationen besser integriert werden können.

Erfindungsgemäß wird die Aufgabe gelöst durch eine Leitstelleneinrichtung für eine eisenbahntechnische Anlage, mit mehreren rechnergestützten und voneinander im Wesentlichen unabhängigen Applikationen, die jeweils zum Erstellen und Ausgeben von applikationsbezogenen Bilddaten ausgebildet sind, mit wenigstens einer zentralen Recheninstanz, die zum Empfangen der applikationsbezogenen Bilddaten ausgebildet ist,
mit wenigstens einer mit der Recheninstanz verbundenen Anzeigeeinrichtung zur Anzeige der applikationsbezogenen Bilddaten,
mit wenigstens einem rechnergestützten Integrationsmodul, das sowohl mit der Recheninstanz als auch mit den mehreren Applikationen verbunden ist und für einen Austausch von Prozessdaten und/oder Arbeitsablaufinformationen zwischen den Applikationen ausgebildet ist, und
mit wenigstens einer UX/UI-Datenbank, in der applikationsübergreifende UX/UI-Vorgaben, wie beispielsweise Farben, Schriftarten oder Icons, für die auf der Anzeigeeinrichtung anzuzeigenden Bilddaten abgelegt sind, wobei die Applikationen beim Erstellen der applikationsbezogenen Bilddaten jeweils zur Berücksichtigung der applikationsübergreifenden, in der UX-Datenbank abgelegten UX/UI-Vorgaben ausgebildet sind.

Weiterhin wird die Aufgabe erfindungsgemäß gelöst durch ein Verfahren zum Betreiben einer eisenbahntechnischen Anlage, bei dem mehrere rechnergestützte und voneinander im Wesentlichen unabhängige Applikationen jeweils applikationsbezogene Bilddaten erstellen und ausgeben, bei dem die applikationsbezogenen Bilddaten von wenigstens einer zentralen Recheninstanz empfangen werden, bei dem die applikationsbezogenen Bilddaten von wenigstens einer Anzeigeeinrichtung angezeigt werden, bei dem mittels wenigstens eines sowohl mit der Recheninstanz als auch mit den mehreren Applikationen verbundenen rechnergestützten Integrationsmoduls Prozessdaten und/oder Arbeitsablaufinformationen zwischen den Applikationen ausgetauscht werden und bei dem applikationsübergreifende, in einer UX/UI-Datenbank abgelegte UX/UI-Vorgaben, wie beispielsweise Farben, Schriftarten oder Icons, jeweils beim Erstellen der applikationsbezogenen Bilddaten berücksichtigt werden.

Die erfindungsgemäße Lösung hat den Vorteil, dass hierdurch die verschiedenen Applikationen miteinander integrierbar sind und die angezeigten Bilddaten der applikationsübergreifenden UX (User Experience)/Ul (User Interface)-Vorgabe entsprechen. Dadurch wird eine einheitliche Anzeige erreicht und die Applikationen können miteinander integriert werden.

Hierbei erstellen die unabhängigen Applikationen jeweils Bilddaten und geben diese an die zentrale Rechnerinstanz weiter, welche die Bilddaten auf der verbundenen Anzeigeeinrichtung zur Anzeige bringt. Das rechnergestützte Integrationsmodul erhält Prozessdaten bzw. Arbeitsablaufinformationen von den Applikationen bzw. der Recheninstanz und stellt sie den Applikationen, die sie benötigen, zur Verfügung. Dadurch wird sichergestellt, dass alle Prozessdaten bzw. Arbeitsablaufinformationen dorthin verteilt werden, wo sie benötigt werden. So können die Applikationen in einem funktionalen Gesamtkontext miteinander integriert werden, obwohl sie weiterhin unabhängig voneinander arbeiten.

Anhand der UX/UI-Datenbank können applikationsübergreifende UX/UI-Vorgaben zentral abgelegt und den Applikationen zentral zu Verfügung gestellt werden. So können die Applikationen diese applikationsübergreifenden UX/UI-Vorgaben beim Erstellen der Bilddaten berücksichtigen. Es entsteht ein einheitliches "Look and Feel" der angezeigten Bilddaten, die trotzdem weiterhin unabhängig voneinander jeweils in den Applikationen erzeugt werden. Solche UX/UI-Vorgaben können beispielsweise die folgenden Designmerkmale sein:
- Schriftarten und Schriftgröße,
- Farben, Farbschemata und Farbwerte (z.B. RGB für "grau"),
- Spezielle Hintergrund- und Dialogfarben,
- Zuordnung von Maustasten zu bestimmten Funktionen (z.B. rechte Maustaste = Kontextmenü),
- Display (z.B. Menüstil) und Anordnung der Menüfelder (z.B. "Hilfe" rechts),
- Darstellung zumindest der wichtigsten Widgets (z.B. "Taste", "Eingabefeld", "Radio", "Checkbox"),
- Listenformate (z.B. Farbwechsel bei aufeinanderfolgenden Reihen)
- "Mouseover" Anzeigen,
- Tasten für Zoomfunktionen,
- Gleicher Text für gleiche Funktionen (z.B. "OK" oder "Bestätigen").

Durch die erfindungsgemäße Lösung ist eine voll integrierte Betriebsleittechnik auf der Anzeigeeinrichtung in der Leitstelleneinrichtung möglich, die sowohl vom "Look and Feel" homogen ist und auch applikationsübergreifend Informationen und Arbeitsablaufinformationen integriert. Da bestehende Applikationen durch die erfindungsgemäße Lösung gar nicht oder lediglich minimal angepasst werden müssen, beispielsweise in ihrem Zugriff auf das Integrationsmodul und die UX/UI-Datenbank, ist erfindungsgemäß eine technisch relativ einfache und dadurch kostengünstige Lösung gegeben.

### Folgende Definitionen sollen im Allgemeinen gelten:

Rechnergestützt oder computerimplementiert ist eine Vorrichtung, wenn diese mindestens einen Computer oder Prozessor aufweist, oder ein Verfahren, wenn mindestens ein Computer oder Prozessor mindestens einen Verfahrensschritt des Verfahrens ausführt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Programmmodule sind einzelne Software-Funktionseinheiten, die einen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors oder hardwaretechnisch, wenn mehrere Prozessoren zum Einsatz kommen, umgesetzt sein.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

### Ausgestaltungen der Erfindung

Die erfindungsgemäße Lösung kann durch vorteilhafte Ausgestaltungen weiterentwickelt werden, die im Folgenden beschrieben sind.

So kann die UX/UI-Datenbank innerhalb des Integrationsmoduls ausgebildet sein. Dies hat den Vorteil, dass der Zugriff bzw. die Datenkommunikation mit dem Integrationsmodul gleichzeitig auch für die UX/UI-Datenbank genutzt werden können. Dies vereinfacht die Architektur der Leitstelleneinrichtung. Selbstverständlich können die UX/UI-Datenbank und das Integrationsmodul als Programmmodule ausgebildet sein, wie sie oben definiert sind.

Um eine möglichst einfache Verwendung der applikationsbezogenen Bilddaten auf der zentralen Recheninstanz zu ermöglichen, kann die Recheninstanz wenigstens eine für eine der Applikationen spezifizierte Clientanwendung umfassen, die zum Empfang der applikationsbezogenen Bilddaten ausgebildet ist, und/oder die Recheninstanz wenigstens ein mit einer der Applikationen im Austausch stehendes Applikations-Programmmodul umfassen, das eine Anzeige der applikationsbezogenen Bilddaten ermöglicht. Die entsprechende Clientanwendung kann sich dann beispielsweise unabhängig mit der zugehörigen Applikation selbst kontinuierlich synchronisieren. Das Applikations-Programmmodul kann hierbei beispielsweise durch eine Webapplikation oder über einen Remote Desktop realisiert sein, über das die Bilddaten von der entsprechenden Applikation auf der Anzeigeeinrichtung dargestellt werden.

In einer weiteren vorteilhaften Ausgestaltung kann das Integrationsmodul von wenigstens einem Message Broker ausgebildet werden. Dies hat den Vorteil, dass Message Broker bereits am Markt verfügbar sind und daher eine kostengünstige Lösung bieten. Der Message Broker kann dann entsprechend individuell angepasst, skaliert und redundant ausgelegt werden.

Um eine zeitgemäße Erfassung sämtlicher digitaler Daten wie der Prozessdaten oder der Arbeitsablaufinformationen zu realisieren, kann die Leitstelleneinrichtung wenigstens ein rechnergestütztes Speichermodul aufweisen, das zur Speicherung von applikationsspezifischen Daten ausgebildet ist und sowohl mit der zentralen Recheninstanz als auch mit den mehreren Applikationen signaltechnisch verbunden ist. Diese Verbindung kann beispielsweise über Programmierschnittstellen realisiert werden, die im Folgenden noch genauer beschrieben sind.

Für eine Erhöhung der Sicherheit im Sinne der Cybersecurity kann die Leitstelleneinrichtung wenigstens eine Firewall aufweisen, die zwischen der zentralen Recheninstanz und zumindest einer der Applikationen ausgebildet ist.

In einer vorteilhaften Ausgestaltung können die Applikationen wenigstens eine Applikation zur Fahrplanerzeugung, eine Applikation für die Disposition, eine Applikation zur Betriebssteuerung, eine Applikation für ein Stations- und Energiemanagement, eine Applikation für Training/Simulation, eine Applikation für eine korrektive bzw. vorausschauende Wartung und/oder eine Applikation für ein Flottenmanagement umfassen.

In einer weiteren vorteilhaften Ausgestaltung können die Applikationen jeweils zum Übermitteln von vorbestimmten Prozessdaten bzw. Arbeitsablaufinformationen an das Integrationsmodul oder Empfangen von vorbestimmten Daten bzw. Arbeitsablaufinformationen vom Integrationsmodul ausgebildet sein. Dies hat den Vorteil, dass sämtliche Applikationen die von anderen Applikationen benötigten Prozessdaten bzw. Arbeitsablaufinformationen erhalten, ohne dass die Applikationen selbst direkt miteinander kommunizieren oder in Kontakt treten müssen. Hierbei werden die Applikationen derart ausgebildet, dass die von anderen Applikationen benötigten Prozessdaten bzw. Arbeitsablaufinformationen an das Integrationsmodul übermittelt werden. Das Integrationsmodul ist so ausgebildet, dass die empfangenen Prozessdaten bzw. Arbeitsablaufinformationen an alle Applikationen gesendet bzw. verteilt werden, die diese benötigen.

Ferner können die Applikationen, die zentrale Recheninstanz, das Integrationsmodul und die UX/UI-Datenbank jeweils wenigstens eine Programmierschnittstelle umfassen, mittels denen die Prozessdaten, Arbeitsablaufinformationen und/oder applikationsbezogenen Bilddaten übermittelt werden. Solche Programmierschnittstellen können auch als API (Application Programming Interface) bezeichnet werden. Sie haben den Vorteil, dass über die Programmierschnittstellen verschiedene unterschiedliche Applikationen sehr einfach miteinander kommunizieren können. Für den Fall, dass die UX/UI-Datenbank in dem Integrationsmodul umfasst ist, benötigt die UX/UI-Datenbank ggf. keine eigene Programmierschnittstelle.

Weiterhin betrifft die Erfindung eine eisenbahntechnische Anlage mit wenigstens einer Leitstelleneinrichtung, wobei die Leitstelleneinrichtung nach einer der oben genannten Ausführungsformen ausgebildet ist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

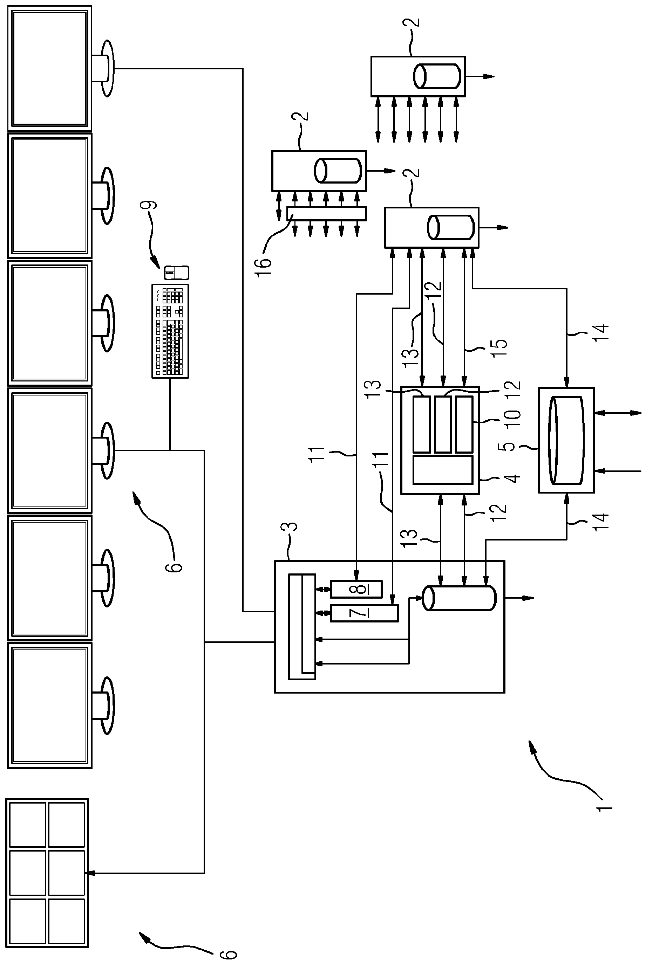

### Exemplarische Ausführungsbeispiele der Zeichnung

Im Folgenden wird die Erfindung mit Bezug auf die beigefügte Zeichnung erläutert. Die einzige Figur zeigt eine beispielhafte Ausführungsform einer erfindungsgemäßen Leitstelleneinrichtung in einer schematischen Darstellung.

### Detaillierte Beschreibung der Ausführungsbeispiele

Die Leitstelleneinrichtung 1 ist Teil einer nicht weiter dargestellten eisenbahntechnischen Anlage und umfasst mehrere Applikationen 2, eine zentrale Recheninstanz 3, ein rechnergestütztes Integrationsmodul 4, ein Speichermodul 5 und mehrere Anzeigeeinrichtungen 6. Die erfindungsgemäße Leitstelleneinrichtung 1 ist zum Steuern und Überwachen einer eisenbahntechnischen Anlage ausgebildet. Dies beinhaltet beispielsweise eine Steuerung und Überwachung des Zugverkehrs, Anzeige von Gebäudekomponenten, wie beispielsweise Rolltreppen etc., und ein Fahrplanmanagement.

Die Applikationen 2 sind jeweils rechnergestützt und voneinander im Wesentlichen unabhängig ausgebildet, d. h. die Applikationen können beispielsweise auf unterschiedlichen Computern ausgeführt werden. Der Einfachheit halber sind in der beispielhaften Ausführungsform in der Figur lediglich drei Applikationen 2 dargestellt, obwohl eine größere Anzahl möglich und durchaus üblich ist. Beispielsweise können die dargestellten Applikationen eine Applikation zur Fahrplanerzeugung, eine Applikation für die Disposition der verschiedenen Züge, eine Applikation zur Betriebssteuerung, eine Applikation für ein Stations- und Energiemanagement, eine Applikation für Training bzw. Simulation, eine Applikation für eine korrektive bzw. vorausschauende Wartung und/oder eine weitere Applikation für ein Flottenmanagement umfassen. Die Applikationen 2 sind jeweils sowohl mit der zentralen Recheninstanz 3, dem Integrationsmodul 4 und dem Speichermodul 5 verbunden. Der Einfachheit halber ist bei der schematischen Darstellung der beispielhaften Ausführungsform in der Figur lediglich die linke Applikation 2 mit entsprechenden Pfeilen dargestellt. Die übrigen Applikationen 2 weisen die gleichen Kommunikationsverbindungen auf, obwohl diese nicht komplett dargestellt sind. Die genannten Verbindungen werden später noch im Detail beschrieben und jeweils über eine oder mehrere Programmierschnittstellen realisiert. Die Applikationen 2 sind jeweils rechnergestützt ausgebildet und können auf unterschiedlichen Recheninstanzen oder auch auf einer gemeinsamen Recheninstanz installiert sein. Zur Erhöhung der Sicherheit im Sinne der Cybersecurity kann die Leitstelleneinrichtung 1 auch eine Firewall 16 aufweisen, die zwischen der zentralen Recheninstanz 3 und den Applikationen 2 ausgebildet ist. Bei der Ausführungsform in der Figur ist die Firewall 16 nur bei der mittleren Applikation 2 dargestellt, obwohl diese zwischen jeder der Applikationen 2 und der zentralen Recheninstanz 3 ausgebildet sein können.

Die zentrale Recheninstanz 3 ist unter anderem zum Empfangen von applikationsbezogenen Bilddaten 11 der Applikationen 2 ausgebildet. Die zentrale Recheninstanz 3 in der beispielhaften Ausführungsform in der Figur umfasst wenigstens eine für wenigstens eine der Applikationen 2 spezifizierte Clientanwendung 7, die zum Empfang der applikationsbezogenen Bilddaten 11 ausgebildet ist. Ferner umfasst die Recheninstanz 3 auch wenigstens ein mit der Applikation 2 im Austausch stehendes Applikations-Programmmodul 8, das eine Anzeige der applikationsbezogenen Bilddaten ermöglicht. Die Applikationen 2 sind jeweils entweder mit der Clientanwendung 7 oder dem Applikations-Programmmodul 8 verbunden. Zwar ist in der beispielhaften Figur die linke Applikation 2 sowohl mit der Clientanwendung 7 als auch dem Applikations-Programmmodul 8 verbunden. Dies ist aber nur beispielhaft dargestellt, da in der Praxis lediglich eine der Verbindungen nötig ist. Es ist auch möglich, dass sämtliche Applikationen 2 ihre Bilddaten 11 per Clientanwendung 7 oder per Applikations-Programmmodul 8 der zentralen Recheninstanz 3 zur Verfügung stellen. In diesem Fall wären dann jeweils eine Clientanwendung 7 oder ein Applikations-Programmmodul 8 pro Applikation 2 nötig.

Die zentrale Recheninstanz 3 ist mit den Anzeigeeinrichtungen 6 verbunden. Bei der beispielhaften Ausführungsform in der Figur sind mehrere Anzeigeeinrichtungen 6 vorhanden, obwohl erfindungsgemäß lediglich eine Anzeigeeinrichtung 6 nötig ist. Die Anzeigeeinrichtungen 6 sind zur Anzeige der applikationsbezogenen Bilddaten ausgebildet. Die Anzeigeeinrichtungen 6 können beispielsweise ein oder mehrere Monitore oder Videowände sein, wie sie allgemein bekannt sind. Bei der beispielhaften Ausführungsform in der Figur ist auf der linken Seite eine Anzeigeeinrichtung 6 dargestellt, die als große Videowand ausgebildet ist. Auf der rechten Seite sind sechs Monitore dargestellt, die ebenfalls Anzeigeeinrichtungen 6 darstellen. Bei der beispielhaften Ausführungsform in der Figur werden die Bilddaten 11 der Applikationen 2 parallel auf der Videowand und den sechs Monitoren angezeigt.

Die Leitstelleneinrichtung 1 in der beispielhaften Ausführungsform in der Figur umfasst auch noch Bedienelemente 9, wie beispielsweise eine Tastatur und/oder eine Maus, mit denen Bedieneingaben für die unterschiedlichen Applikationen 2 möglich sind.

Das rechnergestützte Integrationsmodul 4 ist sowohl mit der Recheninstanz 3 als auch mit den Applikationen 2 verbunden und für einen Austausch von Prozessdaten 12 und/oder Arbeitsablaufinformationen 13 zwischen den Applikationen 2 ausgebildet. Das Speichermodul 5 ist sowohl mit der zentralen Recheninstanz 3 als auch jeweils den Applikationen 2 verbunden. Das rechnergestützte Speichermodul 5 ist zur Speicherung von applikationsspezifischen Daten 14 ausgebildet. Die abgespeicherten applikationsspezifischen Daten können von extern abgerufen werden, ggf. unter Berücksichtigung von Cybersecurity-Vorgaben.

Sowohl die Applikationen 2, die zentrale Recheninstanz 3 als auch das Speichermodul 5 weisen jeweils Programmierschnittstellen (nicht dargestellt) auf, über welche diese miteinander zum Datenaustausch für die Prozessdaten 12, die Arbeitsablaufinformationen 13, und die applikationsspezifischen Daten 14 verbunden sind. Es kann hierbei eine Programmierschnittstelle pro Einheit ausreichen. Die Bilddaten 11 werden über eine nicht dargestellte anwendungsspezifische Bilddaten-Schnittstelle oder eine sonstige allgemein übliche Bilddaten-Schnittstelle übermittelt.

Bei der beispielhaften Ausführungsform in der Figur umfasst das Integrationsmodul 4 eine UX/UI-Datenbank 10, in der applikationsübergreifende UX/UI-Vorgaben für die auf den Anzeigeeinrichtungen 6 anzuzeigenden Bilddaten 11 abgelegt sind. So sind durch die UX/UI-Datenbank 10 applikationsübergreifende UX/UI-Vorgaben15 zentral abgelegt, die den Applikationen 2 zentral zu Verfügung stehen. So können die Applikationen 2 diese applikationsübergreifenden UX/UI-Vorgaben 15 abrufen und beim Erstellen der Bilddaten 11 berücksichtigen. Hierdurch ist erfindungsgemäß ein einheitliches "Look and Feel" der angezeigten Bilddaten 11 realisiert, obwohl die Bilddaten 11 weiterhin unabhängig voneinander in den Applikationen 2 erzeugt werden. Die UX/UI-Vorgaben 15 sind bei der beispielhaften Ausführungsform in der Figur die folgenden Designmerkmale:
- Schriftarten und Schriftgröße,
- Farben, Farbschemata und Farbwerte (z.B. RGB für "grau"),
- Spezielle Hintergrund- und Dialogfarben,
- Zuordnung von Maustasten zu bestimmten Funktionen (z.B. rechte Maustaste = Kontextmenü),
- Display (z.B. Menüstil) und Anordnung der Menüfelder (z.B. "Hilfe" rechts),
- Darstellung zumindest der wichtigsten Widgets (z.B. "Taste", "Eingabefeld", "Radio", "Checkbox"),
- Listenformate (z.B. Farbwechsel bei aufeinanderfolgenden Reihen)
- "Mouseover" Anzeigen,
- Tasten für Zoomfunktionen,
- Gleicher Text für gleiche Funktionen (z.B. "OK" oder "Bestätigen").

Die erfindungsgemäße Leitstelleneinrichtung 1 in der beispielhaften Ausführungsform der Figur hat den Vorteil, dass die auf den Anzeigeeinrichtungen 6 dargestellten Bilddaten 11 der verschiedenen Applikationen 2 applikationsübergreifende UX/UI-Vorgaben 15 erfüllen und dadurch für einen Betrachter ein einheitliches "Look and Feel" aufweisen. Dies wird erfindungsgemäß durch die UX/UI-Datenbank 10 erreicht, mit der alle Applikationen 2 verbunden sind. Im Betrieb rufen die Applikationen 2 die applikationsübergreifenden UX/UI-Vorgaben 15 in der UX/UI-Datenbank 10 ab und berücksichtigen diese UX/UI-Vorgaben beim Erstellen der Bilddaten 11. Dadurch werden nur Bilddaten 11 an die zentrale Recheninstanz 3 und von dort weiter an die Anzeigeeinrichtung 6 übertragen, die den applikationsübergreifenden UX/UI-Vorgaben 15 in der UX/UI-Datenbank 10 entsprechen. Die Bilddaten 11 werden dann von den Applikationen 2 jeweils entweder an die Clientanwendung 7 oder das Applikations-Programmmodul 8 in der zentralen Recheninstanz 3 übertragen.

Das Integrationsmodul 4 integriert die verschiedenen auf der Anzeigeeinrichtung 6 dargestellten Applikationen 2 dadurch miteinander, dass Prozessdaten 12 bzw. Arbeitsablaufinformationen 13 zwischen den Applikationen 2 ausgetauscht werden. Hierfür ist jede Applikation 2 so ausgebildet, dass jeweils vorbestimmte Prozessdaten 12 und Arbeitsablaufinformationen 13 an das Integrationsmodul 4 übermittelt werden. Die Arbeitsablaufinformationen 13 könnte man auch als Workflow-Informationen oder-Daten bezeichnen. Das Integrationsmodul 4 übermittelt die Prozessdaten 12 und/oder Arbeitsablaufinformationen 13 an solche Applikationen 2, die diese Prozessdaten 12 bzw. Arbeitsablaufinformationen 13 benötigen. Dies kann beispielsweise als Broadcasting geschehen, d. h. die Prozessdaten 12 und Arbeitsablaufinformationen 13 werden an alle Applikationen 2 gesendet, egal ob sie benötigt werden oder nicht. Alternativ können die Applikationen 2 bestimmte Prozessdaten 12 und Arbeitsablaufinformationen 13 beim Integrationsmodul 4 abonnieren, so dass diese gezielt nur an die Applikationen 2 gesendet werden, die sie benötigen. Unabhängig von den beiden Alternativen ist es so erfindungsgemäß möglich, dass die Prozessdaten 12 und Arbeitsablaufinformationen 13 zwischen den Applikationen 2 ausgetauscht werden, ohne dass diese direkt miteinander in Kontakt treten müssen. Das Integrationsmodul 4 kann beispielsweise von einem Message-Broker ausgebildet werden.

## Patentansprüche

1. Leitstelleneinrichtung (1) für eine eisenbahntechnische Anlage,
mit mehreren rechnergestützten und voneinander im Wesentlichen unabhängigen Applikationen (2), die jeweils zum Erstellen und Ausgeben von applikationsbezogenen Bilddaten (11) ausgebildet sind,
mit wenigstens einer zentralen Recheninstanz (3), die zum Empfangen der applikationsbezogenen Bilddaten (11) ausgebildet ist,
mit wenigstens einer mit der Recheninstanz (3) verbundenen Anzeigeeinrichtung (6) zur Anzeige der applikationsbezogenen Bilddaten (11),
mit wenigstens einem rechnergestützten Integrationsmodul (4), das sowohl mit der Recheninstanz (3) als auch mit den mehreren Applikationen (2) verbunden ist und für einen Austausch von Prozessdaten (12) und/oder Arbeitsablaufinformationen (13) zwischen den Applikationen (2) ausgebildet ist, und
mit wenigstens einer UX/UI-Datenbank (10), in der applikationsübergreifende UX/UI-Vorgaben (15), wie beispielsweise Farben, Schriftarten oder Icons, für die auf der Anzeigeeinrichtung (6) anzuzeigenden Bilddaten (11) abgelegt sind,
wobei die Applikationen (2) beim Erstellen der applikationsbezogenen Bilddaten (11) jeweils zur Berücksichtigung der applikationsübergreifenden, in der UX/UI-Datenbank (10) abgelegten UX/UI-Vorgaben (15) ausgebildet sind.

2. Leitstelleneinrichtung (1) nach Anspruch 1,
**dadurch gekennzeichnet, dass**
die UX/UI-Datenbank (10) innerhalb des Integrationsmoduls (4) ausgebildet ist.

3. Leitstelleneinrichtung (1) nach Anspruch 1 oder 2,
**dadurch gekennzeichnet, dass**
die zentrale Recheninstanz (3) wenigstens eine für eine der Applikationen (2) spezifizierte Clientanwendung (7) umfasst, die zum Empfang der applikationsbezogenen Bilddaten (11) ausgebildet ist, und/oder die Recheninstanz (3) wenigstens ein mit einer der Applikationen (2) im Austausch stehendes Applikations-Programmmodul (8) umfasst, das eine Anzeige der applikationsbezogenen Bilddaten (11) ermöglicht.

4. Leitstelleneinrichtung (1) nach einem der oben genannten Ansprüche,
**dadurch gekennzeichnet, dass**
das Integrationsmodul (4) von wenigstens einem Message Broker ausgebildet wird.

5. Leitstelleneinrichtung (1) nach einem der oben genannten Ansprüche,
**dadurch gekennzeichnet, dass**
die Leitstelleneinrichtung (1) wenigstens ein rechnergestütztes Speichermodul (5) aufweist, das zur Speicherung von applikationsspezifischen Daten (14) ausgebildet ist und sowohl mit der zentralen Recheninstanz (3) als auch mit den mehreren Applikationen (2) signaltechnisch verbunden ist.

6. Leitstelleneinrichtung (1) nach einem der oben genannten Ansprüche,
**dadurch gekennzeichnet, dass**
die Leitstelleneinrichtung (1) wenigstens eine Firewall aufweist, die zwischen der zentralen Recheninstanz (3) und zumindest einer der Applikationen (2) ausgebildet ist.

7. Leitstelleneinrichtung (1) nach einem der oben genannten Ansprüche,
**dadurch gekennzeichnet, dass**
die Applikationen (2) wenigstens eine Applikation zur Fahrplanerzeugung, eine Applikation für die Disposition, eine Applikation zur Betriebssteuerung, eine Applikation für ein Stations- und Energiemanagement, eine Applikation für Training/Simulation, eine Applikation für eine korrektive bzw. vorausschauende Wartung und/oder eine Applikation für ein Flottenmanagement umfassen.

8. Leitstelleneinrichtung (1) nach einem der oben genannten Ansprüche,
**dadurch gekennzeichnet, dass**
die Applikationen (2) jeweils zum Übermitteln von Prozessdaten (12) bzw. Arbeitsablaufinformationen (13) an das Integrationsmodul (4) und/oder Empfangen von Prozessdaten (12) bzw. Arbeitsablaufinformationen (13) vom Integrationsmodul (4) ausgebildet sind.

9. Leitstelleneinrichtung (1) nach einem der oben genannten Ansprüche,
**dadurch gekennzeichnet, dass**
die Applikationen (2), die zentrale Recheninstanz (3), das Integrationsmodul (4) und die UX/UI-Datenbank (10) jeweils wenigstens eine Programmierschnittstelle umfassen, mittels denen die Prozessdaten (12), Arbeitsablaufinformationen (13) und/oder applikationsbezogenen Bilddaten (11) übermittelt werden.

10. Eisenbahntechnische Anlage mit wenigstens einer Leitstelleneinrichtung (1),
**dadurch gekennzeichnet, dass**
die Leitstelleneinrichtung (1) nach einer der oben genannten Ansprüche 1 bis 9 ausgebildet ist.

11. Verfahren zum Betreiben einer eisenbahntechnischen Anlage,
bei dem mehrere rechnergestützte und voneinander im Wesentlichen unabhängige Applikationen (2) jeweils applikationsbezogene Bilddaten (11) erstellen und ausgeben,
bei dem die applikationsbezogenen Bilddaten (11) von wenigstens einer zentralen Recheninstanz (3) empfangen werden,
bei dem die applikationsbezogenen Bilddaten (11) von wenigstens einer Anzeigeeinrichtung (6) angezeigt werden,
bei dem mittels wenigstens eines sowohl mit der Recheninstanz (3) als auch mit den mehreren Applikationen (2) verbundenen rechnergestützten Integrationsmoduls (4) Prozessdaten (12) und/oder Arbeitsablaufinformationen (13) zwischen den Applikationen (2) ausgetauscht werden und
bei dem applikationsübergreifende, in einer UX/UI-Datenbank (10) abgelegte UX/UI-Vorgaben (15), wie beispielsweise Farben, Schriftarten oder Icons, jeweils beim Erstellen der applikationsbezogenen Bilddaten (11) berücksichtigt werden.

12. Computerprogrammprodukt mit Programmbefehlen zur Durchführung des Verfahrens gemäß Anspruch 11.

13. Bereitstellungsvorrichtung für das Computerprogrammprodukt gemäß Anspruch 12, wobei die Bereitstellungsvorrichtung das Computerprogrammprodukt speichert und/oder bereitstellt.
